# FASCICULE DE BREVET EUROPEEN

(11) **EP 0 647 681 B1**
(45) Date de publication et mention de la délivrance du brevet: **11.08.1999**
(21) Numéro de dépôt: 94402138.5
(22) Date de dépôt: 26.09.1994
(51) Int. Cl.: C08L 77/00

(54) **Objet a base d'un melange de polyamide et de polyolefine comprenant une ligne de ressoudure**
Gegenstand aus Polyamid/Polyolefin-Mischung mit Verbindungsnaht
Article based on polyamide-polyolefin blend and comprising a weld line

(30) Priorité: 12.10.1993 FR 9312130
(43) Date de publication de la demande: 12.04.1995
(73) Titulaire: ELF ATOCHEM S.A., 92800 Puteaux, Hauts-de-Seine (FR)
(72) Inventeur: Basset, Dominique, F-27300 Bernay (FR); Bouilloux, Alain, F-27300 Bernay (FR); Le Du, Yves, F-27300 Valailles (FR)

(56) Documents cités:
- EP-A- 0 342 066
- EP-A- 0 364 897
- US-A- 3 845 163
- PATENT ABSTRACTS OF JAPAN vol. 015, no. 369 (C-0868) 18 Septembre 1991 & JP-A-03 146 552 (SHOWA DENKO KK) 21 Juin 1991

## Description

La présente invention concerne un objet à base d'un mélange de polyamide et de polyoléfine comprenant une ligne de ressoudure.

Les mélanges polyamides polyoléfine sont connus pour combiner les avantages des polyoléfines (facilité d'injection, résistance chimique, insensibilité à l'humidité) et des polyamides (bonnes propriétés mécaniques).

Des mélanges à base de polyamide et de polyoléfine ont été décrits dans la demande de brevet EP 342066. Les polyamides et les polyoléfines étant peu compatibles, il est nécessaire, soit de greffer une partie de la polyoléfine par exemple par de l'anhydride maléique, soit d'ajouter un tiers corps (agent compatibilisant).

EP 342 066 montre l'intérêt de certains tiers corps pour obtenir des mélanges de polyamides et de polyoléfine ayant de bonnes propriétés mécaniques. Cependant, si on utilise ces mélanges de polyamide et de polyoléfine pour faire des objets ayant une ligne de ressoudure, il peut se produire des ruptures le long de cette ligne. La ligne de ressoudure dans un objet est la rencontre de deux flux de polymères en fusion quand on fabrique l'objet par exemple par injection en deux ou plusieurs points dans le moule.

A la jonction de deux ou plusieurs fronts de flux de polymères fondus, il se forme des zones caractéristiques, appelées lignes de soudure "LDS" (en anglais weld line ou knit line). Le moulage de pièces complexes par injection est pratiquement impossible à réaliser sans LDS.

La morphologie et les propriétés mécaniques de pièces avec des LDS, diffèrent sensiblement de celles qui en sont dépourvus. En général, les lignes de soudure présentent une orientation de la matière parallèlement au plan de soudure, et provoquent une fragilisation importante des pièces.

Dans le cas des mélanges de polymères imcompatibles, les LDS ont des effets particulièrement dramatiques, du fait du caractère hétérogène de ces matériaux. L'augmentation des températures du moule et de la matière ne suffisent pas à améliorer notablement la solidité des LDS.

Un article de B. FISA et al "Effect of an ionomer compatibilizer on the structure and mechanical properties of injection molded PA6/HDPE blends", paru dans ANTEC '91 pages 1135-1139, décrit l'effet d'un agent compatibilisant pour améliorer la résistance à la traction des LDS. Cet agent est un copolymère éthylène/acide méthacrylique/acrylate d'isobutyle. L'acide méthacrylique est neutralisé à 70 % par du zinc.

On a maintenant trouvé un nouveau mélange de polyamide et de polyoléfine ayant au niveau des LDS un allongement à la rupture satisfaisant. Cet allongement étant obtenu quelque soit l'éventuel agent compatibilisant

L'invention est un objet à base d'un mélange de polyamide et de polyoléfine et comprenant au moins une ligne de ressoudure caractérisé en ce que :
- le rapport des viscosités de la polyoléfine au polyamide mesuré entre 240 et 290°C et à une vitesse de cisaillement supérieure à 100 s⁻¹ est supérieur à 0,70.
- la quantité de polyamide est suffisante pour que l'allongement à la rupture soit supérieur à 10 % et est au moins 58 % en poids.

La demande de brevet JP 1 284785 du 2 Novembre 1989 publiée le 21 Juin 1991 sous le No. JP 3146552 décrit des mélanges comprenant 80 à 40 % de polyamide, 1à 40 % d'une polyolefine modifiée et 20 à 60 % de polypropylène et tel que le rapport de la viscosité du polypropylène à la viscosité du polyamide soit supérieur à 0,75 quand ces viscosités sont mesurées à la température de moulage et à une vitesse de cisaillement de 3 500 sec⁻¹. Ces mélanges sont particulièrement aptes à être peints ou métallisés.

Il n'est rien mentionné sur la tenue des lignes de ressoudure.

La présente invention permet de résoudre en grande partie les problèmes liés au procédé d'injection des mélanges polyamide / polyoléfine, en particulier d'améliorer la tenue des LDS, et de réduire le phénomène de délaminage superficiel. Par ailleurs, les pièces injectées ont des propriétés mécaniques améliorées.

Le mélange est en matrice polyamide, on peut utiliser tout polyamide et plus particulièrement les PA6, PA66, PA11 et PA12. La polyoléfine peut être du polyéthylène, polypropylène, leurs copolymères ou des copolymères éthylène butène... On utilise avantageusement du polypropylène homopolymère ou copolymère. Par exemple, des copolymères blocs ou statistiques propylène / éthylène et des copolymères propylène / butène.

Avantageusement, le melt Flow index (MFi) du polypropylène mesuré à 230°C/2,16 kg est inférieur à 0,5.

Les viscosités sont déterminées à la température, et à la vitesse de cisaillement qui correspondent aux conditions de mise en oeuvre du mélange. Typiquement, la vitesse de cisaillement est supérieure à 100 s⁻¹, et de préférence comprise entre 300 et 5 000 s⁻¹. La température de mise en oeuvre est comprise entre 240 et 290° C.

Le rapport des viscosités est avantageusement compris entre 0,75 et 1,1 et de préférence entre 0,9 et 1,1.

L'homme de métier peut déterminer la quantité de polyamide pour obtenir un allongement à la rupture supérieur à 10 %, par exemple, si on utilise du PA6 ou 66, le mélange doit contenir au moins 58 % en poids de PA et de préférence 60 à 70 %.

La polyoléfine peut être en tout ou partie une polyoléfine modifiée.

C'est par exemple une polyoléfine ayant au moins un groupe fonctionnel choisi parmi les acides carboxyliques, les esters carboxyliques, les anhydrides d'acides et les epoxy. Par exemple, les copolymères éthylène / (méth)acrylate d'alkyle, éthylène / (méth)acrylate d'alkyle / anhydride maléique, éthylène / (méth)acrylate d'alkyle / (méth) acrylate de glycidile, éthylène / acétate de vinyle, éthylène / acétate de vinyle / anhydride maléique éthylène / acétate de vinyle / (méth)acrylate de glycidile, éthylène / acétate de vinyle greffés par l'anhydride maléique, éthylène / (méth)acrylate d'alkyle greffés par l'anhydride maléique, les homo ou copolyoléfines éventuellement greffées par l'anhydride maléique.

On peut aussi ajouter au mélange de polyamide et de polyoléfine un agent compatibilisant, c'est-à-dire qu'on peut avoir les mélanges suivants :
Polyamide / polyoléfine / éventuellement agent compatibilisant
Polyamide / polyoléfine modifiée / agent compatibilisant
Polyamide / polyoléfine modifiée / polyoléfine / agent compatibilisant

L'agent compatibilisant peut être un copolymère greffé d'alpha mono oléfine, tel que le PP maléisé greffé PA (oligomère ou homopolymère PA6, PA11, PA12, copolymère PA66/12).

Ces produits sont décrits dans la demande EP 342 066.

D'autres polyoléfines modifiées à propriété compatibilisante peuvent convenir, en particulier.
Polypropylène maléisé (taux de maléisation ≥ 0.5 %),
Copolymère statistique polyéthylène - polypropylène (EPR), maléisé (taux de maléisation ≥ 0.5 %),
Terpolymère séquencé styrène-éthylène butylène-styrène (SEBS), maléisé (taux de maléisation ≥ 0.5 %), greffé ou non PA6.

EPDM maléisé (taux de maléisation ≥ 0.5 %).

La quantité de PA peut être comprise entre 58 et 75 parties de préférence 60 à 70. La quantité de polyoléfine, et éventuellement polyoléfine modifiée, peut être comprise entre 25 et 42 parties. La quantité d'agent compatibilisant éventuel peut être comprise entre 0 et 15 parties.

On utilise avantageusement les mélanges PA / Polypropylène / polypropylène maléisé greffé PA comprenant :
60 à 70 parties de PA
20 à 30 parties de polypropylène
3 à 10 parties de polypropylène maléisé greffé PA.

Les mélanges précédents peuvent contenir un renforçant choc (RC) à une teneur inférieure à 15 %, exprimée par rapport au poids total du mélange 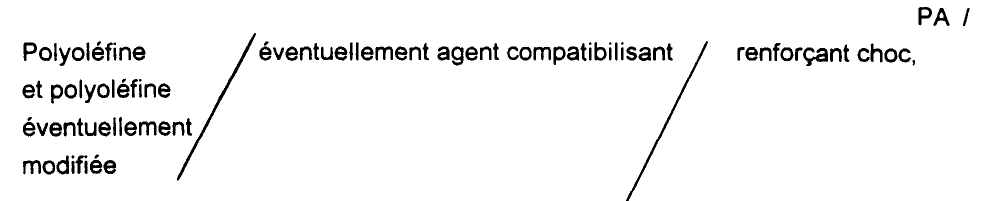 de préférence 10 %, tels que :
EPR maléisé (taux de maléisation ≥ 0.5 %),
SEBS maléisé (taux de maléisation ≥ 0.5 %),
EPDM maléisé (taux de maléisation ≥ 0.5 %).

Les mélanges ainsi réalisés, présentent après injection une phase dispersée nodulaire dans toute l'épaisseur des pièces, et dans les zones de soudure. Cette morphologie homogène permet d'améliorer très sensiblement la tenue des LDS, la résistance au choc et le délaminage.

On ne sortirait pas du cadre de l'invention en ajoutant aux mélanges utilisés des additifs et charges habituelles tels que fibres de verre, ignifugeants, anti oxydant...

### II - EXEMPLES

Les mélanges sont réalisés dans une extrudeuse WERNER. Le long du fourreau, la température matière est comprise entre 240° C et 290° C, la vitesse de rotation de la vis est de 150 tours/minute, et le débit de la matière est de 20 Kg/heure. Des haltères ISO R 527, de dimensions 150*10*4 mn sont ensuite fabriquées par injection aux deux extrémités du moule, de façon à produire une ligne de soudure au centre.

La vitesse de vis de la presse à injecter est comprise entre 10 et 400 tours/minute.

La vitesse d'injection est comprise entre 5 % et 50 % de la vitesse nominale. La température du moule est comprise entre 50°C et 90°C. La température matière dépend de la nature du polyamide, elle est comprise entre 240° C et 290° C.

Les mesures de viscosité à l'état fondu du polypropylène (PP) et du PA sont déterminées au rhéomètre capillaire, à une température comprise entre 240 et 290°C. Les rapports de viscosités η PP / η PA sont donnés pour une vitesse de cisaillement de 600 s⁻¹.

Les proportions sont en poids.

La morphologie des mélanges dans les zones de soudure est observée par microscopie électronique à balayage, sur des sections longitudinales, réalisées par cryomicrotomie, et après extraction sélective de la phase polyoléfine par le xylène bouillant.

Par analyses d'images, on mesure les diamètres moyens en nombre (Dn), en volume (Dv) et l'indice de polydispersité (Ip = Dv/Dp), lorsque les particules peuvent être assimilées à des sphères.

La tenue des LDS est évaluée par essai de traction, selon les spécifications de la norme ISO R 527 (5 éprouvettes par lot). On détermine l'allongement à la rupture.

La tendance au délaminage est qualitativement déterminée par l'observation des surfaces des pièces par microscopie électronique à balayage, après l'application, puis le pelage d'un film adhésif.

La résistance au choc multiaxial et à l'abrasion, de certains mélanges est aussi évaluée sur des plaques 100*100*2 mn dans les conditions suivantes :
- Choc multiaxial : les essais sont réalisés selon la norme ISO 6603-2
   Diamètre de l'impacteur : 20 mm, diamètre de bridage : 40 mm, vitesse : 4m/s.
   On mesure la force maximale (Newton) et l'énergie totale de rupture (joule), à différentes températures (23° C, 0° C, - 20° C).
- Abrasion : les essais sont réalisés suivant la norme NF T 54351 sur l'abrasimètre Taber, modèle 503, par mesure de perte de poids à la température ambiante.
   Meule : calibré H8, vitesse : 60 t/mn, charge appliquée : 500 g, nombre de cycles : 1 000 tours.

### Exemples 1 à 5

La composition et les caractéristiques rhéologiques des mélanges qui font l'objet de l'invention (ex. 1 à 5), et des mélanges utilisés à titre de références (ex. A à D), figurent dans le tableau 1.

Dans les exemples 1 à 5, le polyamide 6 est de l'Utramid B3 (BASF), à une teneur pondérale supérieure ou égale à 65 %. Le polypropylène est du Finasphere 1030 S (Fina) de MFI égal à 0.3. Le rapport des viscosités ηPP/ηPA, à 600 s⁻¹ et 240°C est égal à 1.

Les mélanges sont compatibilisés par différents copolymères à des teneurs pondérales comprises entre 4 et 8 %. (TC désigne l'agent compatibilisant dans le tableau 1).
Ex 1 : PP maléisé à 1 % (Orevac CA 100, vendu par.ELF ATOCHEM)
Ex 2 et Ex 3 : PP maléisé à 1 %, greffé oligomère PA6 de Mn = 1500,
Ex 4 PP maléisé à 1 %, greffé homopolymère PA6 Ultramid B3 (BASF),
Ex 5 PP maléisé à 1 %, greffé copolymère PA66/12.

Dans les ex A à D, le polyamide 6 est de l'Ultramid B3 (BASF), à une teneur pondérale de 57 %. Dans les exemples A à C, le polypropylène est du 3050 MN1 (Appryl), de MFI égal à 4. Dans l'exemple D, le polypropylène est du Finasphere 1030 S. Le rapport des viscosités ηPP/ηPA est égal à 0.5 dans les exemples A à C, égal à 1 dans l'exemple D. Les mélanges sont compatibilisés par différentes copolymères à une teneur pondérale de 10 % :
Ex A : PP maléisé à 0.5 % (Exxcelor PO 1015, vendu par.EXXON)
Ex B : SEBS maléisé (Kraton FG 1901 X, vendu par.SHELL)
Ex C : PP maléisé à 1 %, greffé oligomère PA6 de Mn = 1500,
Ex D : PP maléisé à 1 %, greffé oligomère PA6 de Mn = 1500.

Les performances comparées des pièces figurent dans le tableau 5.

Les exemples 1 à 5 montrent que l'orientation des particules au niveau des LDS est faible, ce qui se traduit par une bonne tenue des lignes de soudure en traction, en particulier lorsqu'on utilise un copolymère PP maléisé greffé PA6, à la teneur de 8 % (Ex. 2 et 4). Avec le PP maléisé greffé oligomère PA6 (Ex. 2), l'allongement à la rupture atteint 138 %.

Ce résultat s'explique par la finesse, et l'homogénéité de la phase dispersée (Ip = 1.9), obtenues avec cet agent compatibilisant. A titre de comparaison, avec les formules des ex A et D l'orientation des particules dans les lignes de soudure est importante, ce qui se traduit par une très mauvaise tenue mécanique. Dans les exemples A à C l'allongement à la rupture est inférieur à 5 %.

Dans l'exemple D, on montre que le fait d'augmenter le rapport de viscosités à 1 sans modifier la composition, permet d'améliorer légèrement la tenue de la LDS (allongement à la rupture = 8 %), sans toutefois atteindre les performances des formulations des exemples 1 à 5.

Les exemples 1 à 5 montrent, par ailleurs, qu'il ne se produit pas de délamination superficielle, comparativement aux exemples A à D.

L'exemple 2 montre, d'autre part, que la résistance au choc multiaxial à basse température (0° C) et la résistance à l'abrasion sont très nettement améliorées, comparativement à l'exemple C.

### Exemple 6

La composition et les caractéristiques rhéologiques des formules renforcées choc, utilisées pour les applications éléments de carrosserie injectée (aile voiture) qui fait l'objet de l'invention (ex. 6) et de l'ex comparatif E, figurent dans le tableau 2.

Dans l'ex. 6, le polyamide est de la Vidyne 21 X (Monsanto), à une teneur pondérale de 65 %. Le polypropylène est du Finasphere 1030 S. Le rapport des viscosités ηPP/ηPA à 600 s⁻¹, et 280° C est égal à 1. Le mélange est compatibilisé par le copolymère PP maléisé à 1 % greffé oligomère PA6 de Mn = 1500, à la teneur pondérale de 5 %. Le renforçant choc employé (RC) est de l'EPR maléisé à environ 1 % (Exxelor VA 1803), à la teneur pondérale de 10 %.

Dans l'ex. E, le polyamide 66 est de la Vidyne 21 X à une teneur pondérale de 59 %. Le polypropylène est du 3050 MN1. Le rapport des viscosités ηPP/ηPA, est égal à 0.5.

Le mélange est compatibilisé par le copolymère PP maléisé à 1 % greffé oligomère PA6 de Mn = 1500, à la teneur pondérale de 9 %. Le renforçant choc employé (RC) est l'Exxelor VA 1803, à la teneur pondérale de 9 %.

Les performances comparées des pièces figurent dans le tableau 6.

L'exemple 6 montre que l'orientation des particules au niveau de la LDS est faible, ce qui se traduit par une bonne tenue de la ligne de soudure en traction.

L'allongement à la rupture atteint 60 %. A titre de comparaison, avec la formule de l'ex. E, l'orientation des particules dans la ligne de soudure est forte, l'allongement à la rupture est inférieur à 5 %.

L'exemple 6 montre, par ailleurs, que la résistance au choc multiaxial à basse température (- 20° C) et à la délamination est très nettement améliorée, comparativement à l'exemple E.

### Exemple 7

La composition et les caractéristiques rhéologiques de la formule qui fait l'objet de l'invention (ex. 7), et des formules utilisées à titre de comparaison (ex. F et G), figurent dans le tableau 3.

Dans l'ex. 7, le polyamide 6 est de l'Ultramid B3 à une teneur pondérale de 65 %. Le polypropylène est du Finasphere 1030 S. Le rapport des viscosités ηPP/η PA à 600 s⁻¹ et 240° C est égal à 1. Le mélange est compatibilisé par le copolymère PP maléisé à 1 % greffé oligomère PA6 de Mn = 1500, à la teneur pondérale de 5 %. Le renforçant choc employé (RC) est l'Exxelor VA 1803, à la teneur pondérale de 10 %.

Dans les exemples F et G, le polyamide 6 est de l'Ultramid B3, à une teneur pondérale de 52 % (Ex. F) et 59 % (Ex G). Le polypropylène est du 3050 MN1 (Ex F), et du Finasphere 1030 S (Ex G). Le rapport des viscosités ηPP/ηPA est égal à 0.5 (Ex. F), et égal à 1 (Ex G). Les mélanges sont compatibilisés par le copolymère PP maléisé à 1 % greffé oligomère PA6 de Mn = 1500, à la teneur pondérale de 9 %. Le renforçant choc employé (RC) est l'Exxelor VA 1803, à la teneur pondérale de 9 % (Ex. F) et 7 % (Ex. G).

Les performances comparées des pièces figurent dans le tableau 7.

L'exemple 7 montre que l'orientation des particules au niveau de la LDS est faible, et que la tenue de la ligne de soudure atteint 12 % d'allongement à la rupture. A titre de comparaison, avec les Ex. F et G, l'orientation des particules dans la ligne de soudure est forte, et l'allongement à la rupture est inférieur à 5 %. Le fait d'augmenter le rapport de viscosité à 1, sans modifier la composition (Ex. G), n'améliorent pas les performances du mélange.

L'exemple 7 montre , par ailleurs, que la délamination est supprimée, comparativement à l'exemple F.

### Exemples 8 à 10

La composition et les caractéristiques rhéologiques du mélange, qui fait l'objet de l'invention, figurent dans le tableau 4.

Le polyamide 6 est de l'Ultramid B3, à une teneur pondérale égale à 65 %. Le polypropylène est du Finasphere 1030 S. Le rapport des viscosités ηPP/ηPA est égal à 1. Le mélange est compatibilisé par le PP maléisé à 1 %, greffé oligomère PA6 de Mn = 1500, à la teneur pondérale de 8 %. Les haltères sont injectées avec différentes vitesses de vis de la presse à injecter.

Les exemples 8 à 9 montrent que la tenue des LDS est améliorée lorsque la vitesse de vis diminue.

**Tableau 1**

| **Exemples** n° | **Mélange PA6/PP/TC** | **nPP/nPA** | **MFI PP** | **TC Agent Compatibilisant** |
|---|---|---|---|---|
| 1 | 68/28/4 | 1 | 0,3 | PP maléisé |
| 2 | 65/27/8 | 1 | 0,3 | PP mal. g.PA6 |
| 3 | 65/30/4 | 1 | 0,3 | PP mal. g.PA6 |
| 4 | 65/27/8 | 1 | 0,3 | PP mal. g.PA6(homopolymère) |
| 5 | 65/27/8 | 1 | 0,3 | PP mal. g. copo PA66/12 |
| A | 57/33/10 | 0,5 | 4 | PP maléisé |
| B | 57/33/10 | 0,5 | 4 | SEBS maléisé |
| C | 57/33/10 | 0,5 | 4 | PP mal. g.PA6 |
| D | 57/33/10 | 1 | 0,3 | PP mal. g.PA6 |

**Tableau 2**

| **Exemples** | **Mélange PA66/PP/TC/ RC** | **nPP/nPA** | **MFI PP** | **TC/RC (renfort choc)** |
|---|---|---|---|---|
| 6 | 65/20/5/10 | 1 | 0,3 | PP mal. g.PA6/EPR maléisé |
| E | 59/23/9/9 | 0,5 | 4 | PP mal. g.PA6/EPR maléisé |

**Tableau 3**

| **Exemples** | **Mélange PA6/PP/TC/RC** | **nPP/nPA** | **MFI PP** | **TC/RC** |
|---|---|---|---|---|
| 7 | 65/20/5/10 | 1 | 0,3 | PP mal. g.PA6/EPR maléisé |
| F | 52/30/9/9 | 0,5 | 4 | PP mal. g.PA6/EPR maléisé |
| G | 59/25/7/9 | 1 | 0,3 | PP mal. g.PA6/EPR maléisé |

**Tableau 4**

| **Exemples** | **Mélange PA6/PP/TC** | **nPP/nPA** | **MFI PP** | **TC** | **Vitesse de vis** t/mn |
|---|---|---|---|---|---|
| 8 | 65/27/8 | 1 | 0,3 | PP mal. g.PA6 | 160 |
| 9 | 65/27/8 | 1 | 0,3 | PP mal. g.PA6 | 250 |
| 10 | 65/27/8 | 1 | 0,3 | PP mal. g.PA6 | 400 |

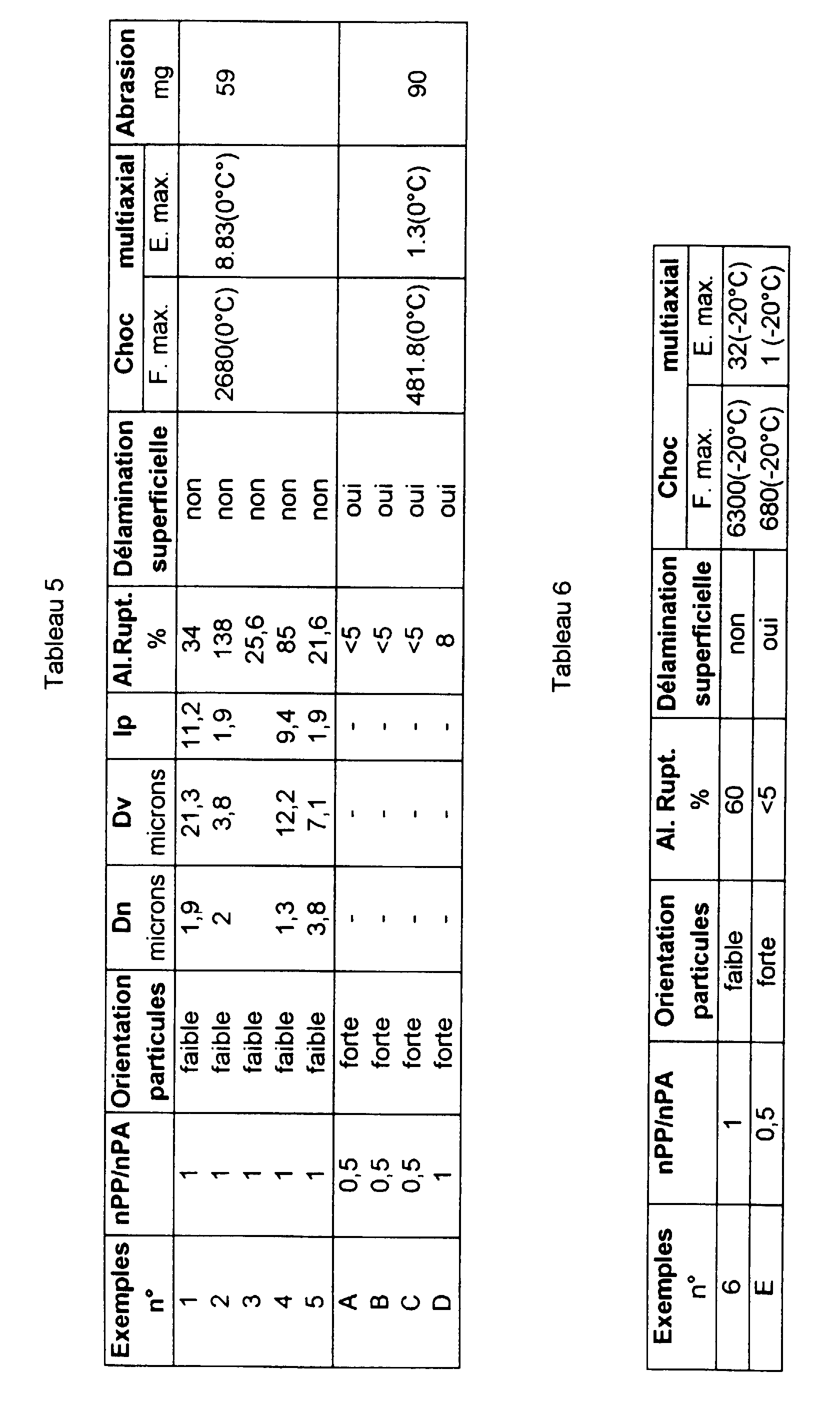

**Tableau 7**

| **Exemples** n° | **nPP/nPA** | **Orientation particules** | **Al. Rupt. %** | **Délamination superficielle** |
|---|---|---|---|---|
| 7 | 1 | faible | 12 | non |
| F | 0,5 | forte | <5 | oui |
| G | 1 | forte | <5 | oui |

**Tableau 8**

| **Exemples** n° | **nPP/nPA** | **Vitesse de vis** t/mn | **Orientation particules** | **Al. Rupt. %** | **Délamination superficielle** |
|---|---|---|---|---|---|
| 8 | 1 | 160 | faible | 27,5 | non |
| 9 | 1 | 250 | faible | 17,5 | non |
| 10 | 1 | 400 | faible | 18,6 | non |

## Revendications

1. Objet à base d'un mélange de polyamide et de polyoléfine et comprenant au moins une ligne de ressoudure caractérisé en ce que :
- le rapport des viscosités de la polyoléfine au polyamide mesuré entre 240 et 290 °C et à une vitesse de cisaillement supérieure à 100 s⁻¹ soit supérieure à 0,70.
- la quantité de polyamide est suffisante pour que l'allongement à la rupture soit supérieur à 10 % et est au moins 58 % en poids.

2. Objet selon la revendication 1 caractérisé en ce que le rapport des viscosités est compris entre 0,75 et 1,2.

3. Objet selon la revendication 1 ou 2 caractérisé en ce que la polyoléfine est du polypropylène homopolymère ou copolymère.

4. Objet selon l'une des revendications 1 à 3 caractérisé en ce que la polyoléfine contient au moins un groupe fonctionnel choisi parmi les acides carboxyliques, les esters carboxyliques, les anhydrides d'acide et les epoxy.

5. Objet selon l'une des revendications 1 à 4 caractérisé en ce que le mélange comprend aussi un agent compatibilisant.

6. Objet selon la revendication 5 caractérisé en ce que le mélange comprend 60 à 70 parties de polyamide, 20 à 30 parties de polypropylène et 3 à 10 parties de polypropylène maléisé greffé PA comme agent compatibilisant.

7. Objet selon l'une des revendications 1 à 6 caractérisé en ce que le mélange comprend aussi un renforçant choc.

## Patentansprüche

1. Gegenstand auf der Basis eines Polyamid/Polyolefin-Gemischs, der mindestens eine Fließnaht aufweist, dadurch gekennzeichnet, daß
- das Verhältnis der Viskositäten des Polyolefins und des Polyamids, die bei 240 bis 290 °C und bei einer Schergeschwindigkeit größer als 100 s⁻¹ gemessen werden, größer als 0,70 ist,
- der Mengenanteil des Polyamids ausreichend groß ist, daß die Reißdehnung größer als 10 % ist, und mindestens 58 Gew.-% beträgt.

2. Gegenstand nach Anspruch 1, dadurch gekennzeichnet, daß das Vehältnis der Viskositäten im Bereich von 0,75 bis 1,2 liegt.

3. Gegenstand nach Anspruch 1 oder 2, dadurch gekennzeichnet, daß das Polyolefin ein Polypropylen-Homopolymer oder Polypropylen-Copolymer ist.

4. Gegenstand nach einem der Ansprüche 1 bis 3, dadurch gekennzeichnet, daß das Polyolefin mindestens eine funktionelle Gruppe enthält, die unter Carbonsäuren, Carbonsäureestern, Carbonsäureanhydriden und Epoxiden ausgewählt ist.

5. Gegenstand nach einem der Ansprüche 1 bis 4, dadurch gekennzeichnet, daß das Gemisch außerdem ein Kompatibilisierungsmittel enthält.

6. Gegenstand nach Anspruch 5, dadurch gekennzeichnet, daß das Gemisch 60 bis 70 Teile Polyamid, 20 bis 30 Teile Polypropylen und 3 bis 10 Teile maleinisiertes, mit PA gepfropftes Polypropylen als Kompatibilisierungsmittel enthält.

7. Gegenstand nach einem der Ansprüche 1 bis 6, dadurch gekennzeichnet, daß das Gemisch außerdem einen Schlagzähigkeitsverbesserer enthält.

## Claims

1. Article based on a mixture of polyamide and polyolefin and including at least one weld line, characterized in that:
- the ratio of the viscosities of the polyolefin to the polyamide, measured between 240 and 290°C and at a shear rate higher than 100 s⁻¹, is greater than 0.70,
- the quantity of polyamide is sufficient for the elongation at break to be greater than 10 % and is at least 58 % by weight.

2. Article according to Claim 1, characterized in that the ratio of the viscosities is between 0.75 and 1.2.

3. Article according to Claim 1 or 2, characterized in that the polyolefin is polypropylene homopolymer or copolymer.

4. Article according to one of Claims 1 to 3, characterized in that the polyolefin contains at least one functional group chosen from carboxylic acids, carboxylic esters, acid anhydrides and epoxy groups.

5. Article according to one of Claims 1 to 4, characterized in that the mixture also includes a compatibilizing agent.

6. Article according to Claim 5, characterized in that the mixture includes 60 to 70 parts of polyamide, 20 to 30 parts of polypropylene and 3 to 10 parts of PA-grafted maleinized polypropylene as compatibilizing agent.

7. Article according to one of Claims 1 to 6, characterized in that the mixture also includes an impact improver.
